# EUROPEAN PATENT APPLICATION

(11) **EP 4 592 121 A1**
(43) Date of publication of application: **30.07.2025**
(21) Application number: 23867683.7
(22) Date of filing: 20.09.2023
(51) Int. Cl.: B60K 35/00, A01B 59/04, A01B 76/00, F02D 45/00, B60D 1/26

(54) **SMART CONTROL SYSTEM FOR AGRICULTURAL MACHINERY THAT CAN BE COUPLED TO A TRACTOR**

(30) Priority: 22.09.2022 ES 202231549 U
(71) Applicant: Melmak Technologies, S.L., 30510 Yecla (Murcia) (ES)
(72) Inventor: FAJARDO MELLINAS, Jose, 30510 YECLA (Murcia) (ES); LOPEZ MARTINEZ, Francisco Jose, 30510 YECLA (Murcia) (ES); LOPEZ MARTÍNEZ, Javier, 30510 YECLA (Murcia) (ES)
(74) Representative: Herrero & Asociados, S.L.
(86) International application number: PCT/ES2023/070564
(87) International publication number: WO 2024/062150

(57) **Abstract**

A system (100) for controlling agricultural machinery from a tractor, comprising an electronic control unit (101) with a microprocessor and memory, located in the machinery and integrating a joystick-type control lever (105), installable in the tractor, composed of an articulated handle and a button panel, which generates electrical impulses translated into orders by the microprocessor. It includes a harness (102) with an electrical connector, a cable for connecting to the lever and a telematic module for collecting data stored by the electronic control unit (101), time and positioning data or data collected from a website. It also has an output connector strip (103) for operating the actuators according to orders from the microprocessor and an input connector strip (104) for connecting sensors to the machinery, and may include an expansion module (106, 107) for connecting the harness (102) with additional actuators/sensors that are incorporated in the agricultural machinery.

## Description

### OBJECT OF THE INVENTION

The present invention is part of the industrial sector dedicated to agricultural machinery and, especially, to the electronic devices used for the operation of said machinery.

Particularly, the present invention relates to a smart system for controlling agricultural machinery that can be attached to a tractor.

### BACKGROUND OF THE INVENTION

Tractor-attachable agricultural machinery is traditionally characterized by its low technology requirements, and is usually fitted with an electro-hydraulic system, which allows the handling of hydraulic actuators in the equipment such as pistons or hydraulic motors, by means of the electrical signals managed by a block of solenoid valves activated from a control box, placed in the tractor cabin. Harvesters and other self-propelled machinery are excluded from this category.

The power supply for this type of agricultural machinery is carried out through a connection to the tractor's electrical circuit, either directly to the battery or through a connection to one of the ports specifically provided for this purpose. The hydraulic power that allows the various actuators of the tool provided by the agricultural machinery to be operated is also obtained from the tractor, either through a connection to the tractor's hydraulic circuit, or by virtue of the power supplied by the tractor's power take-off that drives an independent hydraulic pump.

It is not common in this type of agricultural machinery to incorporate electronics that allow working with digital signals, as well as collecting data, for the control of the agricultural machinery by the operator, and there are no systems that give the user the possibility of seeing the information associated with the signals and data coming from the agricultural machinery.

The technical challenge is therefore to develop a complete control system for operating agricultural machines in such a way that a wide range of tools can be controlled remotely with a single plug-and-play control element.

### DESCRIPTION OF THE INVENTION

The present invention serves to solve the aforementioned problem by providing a control device in the form of a "joystick" that can be attached to a tractor and is applicable to agricultural machinery, i.e., inert machinery that depends on the power supply of a tractor or similar self-propelled machinery (telescopic handler, grape harvester, etc.) to be operated.

Fundamentally, a smart system is described that comprises at least one motion control device, which can be incorporated into the cabin of a tractor, to remotely control multiple models of agricultural machinery that can be operated from the tractor. The remote motion control device comprises a joystick with push buttons and, optionally, at least one display screen that can be integrated into the joystick that allows the user/operator of the tractor to view in real time the different operating variables of the agricultural machinery and the alerts that may be generated during the operation of said machinery.

The smart system comprises an electronic control unit or ECU which is the machine's automaton and is programmed so that, when physically connected to the joystick, the machine is automatically recognized and the functionality of the joystick buttons is reconfigured to control the identified machine. In addition, the system is capable of communicating with the tractor to transfer information through it and display it on the tractor operator's screen.

This joystick or remote control device also connects to a telematics unit that acts as a router, allowing, through a wireless communication interface, the operating data collected by the sensors provided in the agricultural machinery to be emitted and transmitted online to an external platform (for example, to the Internet cloud) in order to view them in real time or store them and generate historical data for later viewing (for example, in a web environment specifically designed for this purpose).

Thanks to the design of the joystick circuits, the present invention achieves an optimization of energy consumption by the tool or implement of agricultural machinery. Through the remote control joystick device itself, power is supplied to the electric actuators of the machine being controlled.

One aspect of the invention relates to a system for controlling agricultural machinery comprising an electronic control unit (ECU) in the agricultural machinery with at least one microprocessor configured to generate orders to actuators provided in the agricultural machinery and an internal memory for storing data received from sensors provided in the agricultural machinery and a control lever which is a motion control "joystick" device for remote control of the agricultural machinery. The control lever is adapted to be installed in the tractor from which an operator operates the agricultural machinery and comprises a handle-button panel assembly which constitutes a gripping element for the operator, the handle articulated at its base around four axes of movement and with one or more buttons, to operate movements of the agricultural machinery, generating electrical impulses for each press by the operator on the button panel and each movement of the handle, sending the electrical impulses to the ECU which translates them into orders for the actuators of the agricultural machinery. The system comprises a harness on the agricultural machinery for the connection between the ECU and the control lever and with a telematics module to collect the data stored in the ECU, the harness connected to the sensors and actuators provided on the agricultural machinery through an input and an output connector strip respectively.

The advantages of the present invention over the prior art are fundamentally:
- The present invention constitutes a digital solution that is articulated around the previously described "joystick" and that allows the user to operate the equipment in an intuitive way while giving feedback information on the use and operation of the elements of the agricultural machinery.
- It is easily scalable and extrapolated to various agricultural implements, allowing their use to be digitalized and their operation to be monitored by adding sensors to said implements.
- This system also allows for the simultaneous operation of several machines and is fully upgradeable in terms of firmware, allowing for expansion of machine functionality such as the addition of new actuators or new sensors.

- By means of the combination of sensors and actuators in the system, it is possible to "automate" movements or functions of the machine, thus facilitating its operation by the user. This improvement is easy to implement even on "old" equipment by carrying out a retrofit, which allows extending the useful life of the equipment.
- As it is a modular system, it allows for easy repair and replacement of components with just two tools (Allen key and screwdriver), which extends the useful life of the system, as well as it facilitates the separation of the components for recycling, once the product's life has expired, thus promoting the circular economy.
- It is a "plug&play" system that automatically recognizes the machine to which it is connected, reconfiguring the buttons and push-buttons of the remote control "joystick" device to optimize its handling, seeking good ergonomics and intuitive use. In this sense, by incorporating a screen in the "joystick" device, the graphical user interface is self-explanatory, showing on-screen the step-by-step instructions for use and the functionality of each of the buttons.

These and other advantages can be derived in light of the description of the invention presented in detail below.

### DESCRIPTION OF THE DRAWINGS

To complement the description being made and in order to assist in a better understanding of the features of the invention, in accordance with a preferred example of its practical implementation, a set of drawings is included as an integral part of said description, in which, for illustrative and non-limiting purposes, the following has been represented:

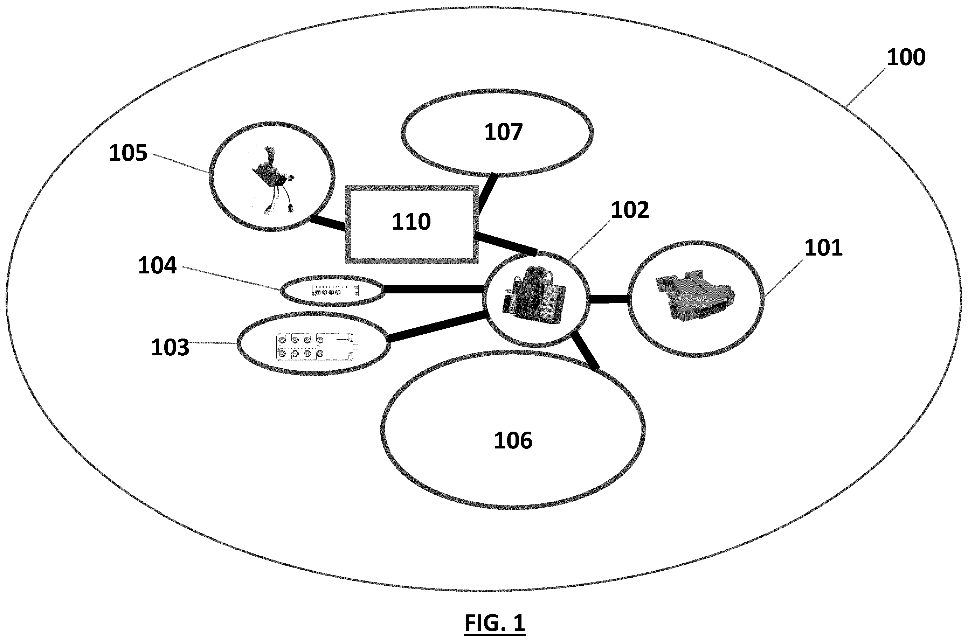

Figure 1.- Shows a block diagram of the architecture of the system for remote control of agricultural machinery, according to a possible embodiment of the invention.

### PREFERRED EMBODIMENT OF THE INVENTION

A detailed explanation of a preferred embodiment of the object of the present invention is provided below with the aid of the aforementioned figures.

A smart system (100) is provided for controlling agricultural machinery using a remote control lever (105), also popularly called a "joystick", the joystick (105) located in a tractor that incorporates the agricultural machinery to be controlled and the system comprising the following components shown in Figure 1.
- An electronic control unit (101) or ECU, comprising at least one microprocessor, located in the agricultural machinery to be controlled, prepared to work under extreme conditions. In a possible embodiment, the microprocessor has a single connection port or electrical connector, preferably of the type sealed against environmental conditions and specifically designed for wire-to-wire applications in harsh environments, through which it is connected to a harness (102) of connecting cables. The microprocessor stores and executes the "firmware" program that operates the system for the agricultural machinery to be controlled, translating the electrical impulses coming from the control lever (105), electrical impulses from the operator's keystrokes on a button panel incorporated into the control lever (105), into signals that it interprets and the microprocessor converts into orders in the form of electrical signals that reach the solenoid valves and other actuators provided in the agricultural machinery. The microprocessor has an internal memory in which it also stores one or more predefined variables that the electronic control unit (101) receives through the reading of different sensors placed on the machine (pressure, temperature, level, operating hours...).
- A harness (102) comprising a junction box from which the different connection elements emerge, constituting a set of cables to connect the different components of the system. The harness (102) is also installed in the machine to be controlled and comprises an electrical connector for connection to the electronic control unit (101), as described above, and a connection cable with a plug that is plugged, through a distributor (110), to the control lever (105). A telematics module is located inside the harness (102), which is a hardware module with telematics for collecting data stored by the electronic control unit (101) as well as other data generated by the telematics module itself (for example, global time and positioning data provided by a GPS or Global Positioning System sensor). The data collected by the telematics module are transmitted via a wireless communication interface to an external platform, such as the Internet cloud, at a certain time frequency, for example, by means of a SIM card with data connection. The harness (102) is also connected to sensors and actuators placed on the machine to be controlled, by means of the input and output strips (104, 103) described below.
- An output connector strip (103) connected to the harness (102) and to which the drive cables that activate the actuators placed on the machine, such as solenoid valves, are connected.
- An input connector strip (104) with female connectors to which the cables of the sensors arranged in the machinery are connected, such as inductive sensors, inclinometers, pressure switches ...
- Additionally, the harness (102) can be connected to a first and second expansion module (106, 107), as an optional component that allows to expand the number of inputs and outputs to connect more hydraulic actuators or more sensors in the agricultural machines that may require so. In addition, the expansion module (106, 107) is also configured to make a more efficient management of a cooler, for example, for agricultural machines that mount an oil cooler.
- A joystick or control lever (105) for remote control, comprising:
   ∘ A machined, watertight metal box containing the internal elements of the joystick (wiring and electronic boards), with safety electrical connectors, preferably with reset for emergency stop, for example, according to the specifications of the UNE-EN ISO 12100 regulations.
   ∘ A handle-button panel assembly (which constitutes a grip element) consisting of a button panel that has at least one power button on the metal box and a plastic handle fitted with one or more buttons through which the movements (electro-hydraulic functions) of the agricultural machine are operated; the handle with the button panel is articulated at its base around four axes of movement. The design of this grip element seeks to improve the ergonomics of existing solutions by designing a system in which the buttons can be pressed comfortably without having to hold the handle and the position of the hand holding the handle can be changed without losing control.
   ∘ An update port, which is an electrical socket located on the front of the box, covered with a metal cap, to connect the system to a computer through a special cable and update the electronic control unit program (101).
   ∘ A cooler cable, which is a length of electrical cable with a two-pole plug onto which the cooler cable plugs, on agricultural machinery equipment that has a cooler. In an alternative embodiment, the socket for powering the cooler may come out of the harness (102).
   ∘ A connecting cable, which is a length of electrical cable with a plug for connecting the control lever (105) to the harness (102).
   ∘ A supply cable with a three-pole plug for connecting to a power socket, typically 12V, on the tractor through which both the control lever (105) and the agricultural machinery to be controlled are supplied with power.
   ∘ An armrest support, which constitutes an ergonomic supplement, being a compact metal support, screwed to the box, which serves to support the forearm during the operation of the equipment, adjustable in height and optimized in size for any person.
   ∘ A screen, for example, an OLED screen (organic light emitting diode), which is an optional implement that can be installed on the push-button panel and is connected to a motherboard, located inside the box of this control lever (105), so that it is also indirectly connected to the harness (102) and the electronic control unit (101), allowing the variables from the machine sensors recorded in the electronic control unit (101) to be displayed in real time. The screen, in addition to showing the user information about the operation of the equipment, can also display alerts about faults or breakdowns. The advantage of placing the screen on the button panel of the handle-button panel assembly is that the user is always able to see the screen, without the operator's own hand obstructing the view of the screen, regardless of the movements made with the handle, which is advantageous compared to other "joystick" solutions in which the screen is integrated into the housing instead of on the "grip" element of the "joystick". The modular system allows the same "grip" to be fitted with a button panel without a screen and a button panel with a screen, at the user's choice.

For communication between the machinery's automaton, i.e. the electronic control unit (101) or ECU and the joystick or control lever (105) for its remote control, a communication protocol is used that can be interpreted by the microprocessor(s) of the electronic control unit (101) and the electronic board(s) of the control lever (105), located in the watertight box of the joystick and with which the remote control device described works correctly according to the protocol decided to communicate with all the components of the system and with the sensors and actuators of the machinery to be controlled. In a possible embodiment, the joystick (105) integrates four motherboards based on CAN-BUS communication technology, which incorporate protection against voltage spikes allowing correct communication between all the components that make up the complete system, as well as a self-diagnosis collecting and analyzing data on the correct operation of the system and, in case of failure, sending alerts to the user. The CAN protocol used has a high compatibility with other CAN systems such as CAN-OPEN, J3919 or ISOBUS, which allows the system to be connected to other microprocessors used in ECUs of other machines and also to connect it to other external interfaces such as tractors or other types of vehicles. This communication protocol only requires two wires (cables) to transmit all the information, in addition to two power wires, so thanks to this protocol and the specific design of the motherboards, all the system components can be communicated with only four wires, minimizing the volume of cables inside the watertight box of the joystick (105) and therefore reducing the risk of breakdowns. This is especially beneficial in the case of the joystick (105) with a screen, since by being integrated into the upper part of the handle-button panel assembly, the cables pass through the assembly and, by minimizing the number of cables, the risk of breaking or disconnecting due to fatigue is much lower.

By means of the developed motherboards, energy management is optimized and it is possible to add an on-demand control subsystem of one or more coolers through the at least one expansion module (106, 107) described above. Furthermore, the expansion modules (106, 107) allow the incorporation of additional functionalities such as self-cleaning of a fan, typically used in machines, by reversing its direction of rotation. Another possible additional functionality is the control of the consumption of the different actuators of the machine, as well as diagnosing problems in any actuator that the operator who operates the machine can see in real time through alerts displayed on the screen. Among the main faults that can be self-diagnosed, to mention a few examples, there are failures in the operation of push buttons, unstable power supply, failure in components such as solenoid valves..., and the overall operation of the machine.

## Claims

1. A system (100) for controlling agricultural machinery attachable to a tractor, comprising:
- an electronic control unit (101) located in the agricultural machinery to be controlled, the electronic control unit (101) comprising at least one microprocessor configured to generate orders to actuators provided in the agricultural machinery and comprising an internal memory configured to store data received from sensors provided in the agricultural machinery;
**characterized by** further comprising:
- a control lever (105) for remote control of the agricultural machinery, the control lever (105), installable in the tractor, comprising a handle-button panel assembly constituting a gripping element for an operator of the tractor and comprising a handle articulated at its base around four axes of movement and a button panel with one or more buttons, the handle-button panel assembly adapted to operate movements of the agricultural machinery, generating electrical impulses for each press by the operator on the button panel and each movement of the handle, and sending the electrical impulses to the at least one microprocessor of the electronic control unit (101) to translate them into orders generated by the electronic control unit (101);
- a harness (102) installable in the agricultural machinery to be controlled, comprising an electrical connector for connection to the electronic control unit (101) and a connection cable to the control lever (105) installed in the tractor, and further comprising a telematic module configured to collect the data stored by the electronic control unit (101);
- an output connector strip (103) connected to the harness (102) and to which drive cables are connected to operate the actuators provided in the agricultural machinery based on the orders generated by the electronic control unit (101);
- an input connector strip (104) connected to the harness (102) on which cables are connected through female connectors to the sensors provided in the agricultural machinery.

2. The system (100) according to claim 1, **characterized in that** the telematics module is further configured to collect time and positioning data from a GPS sensor.

3. The system (100) according to any of the preceding claims, **characterized in that** the telematic module comprises a wireless communication interface and is further configured to transmit the collected data to an external web platform.

4. The system (100) according to any of the preceding claims, **characterized by** further comprising an expansion module (106, 107) adapted to connect the harness (102) with additional actuators or additional sensors that are incorporated in the agricultural machinery.

5. The system (100) according to claim 4, **characterized in that** the at least one expansion module (106, 107) is adapted to connect at least one cooler of the agricultural machinery.

6. The system (100) according to any of the preceding claims, **characterized in that** the control lever (105) comprises a watertight box housing at least one electrical connection cable for connecting the control lever (105) to the harness (102) and a plurality of electronic boards configured to communicate with the at least one microprocessor of the electronic control unit (101).

7. The system (100) according to claim 6, **characterized in that** the plurality of electronic boards is configured to use a CAN-BUS communication protocol to communicate with the electronic control unit (101).

8. The system (100) according to any of claims 6-7, **characterized in that** the watertight box of the control lever (105) comprises an update port for connecting to a computer configured to update the configuration of the at least one microprocessor of the electronic control unit (101).

9. The system (100) according to any of claims 6-8, **characterized in that** the watertight box comprises safety electrical connectors with reset for emergency stop.

10. The system (100) according to any of claims 6-9, **characterized in that** the watertight box comprises a cooling cable which is a section of electric cable with a two-pole plug onto which a cable from a cooler built into the agricultural machinery is plugged.

11. The system (100) according to any of claims 6-10, **characterized in that** the watertight box comprises a supply cable which is a section of electric cable with a three-pole plug for connecting to a power outlet provided in the tractor and through the supply cable the control lever (105) and the agricultural machinery are supplied.

12. The system (100) according to any of claims 6-11, **characterized in that** the control lever (105) further comprises an ergonomic armrest support attachable to the watertight box.

13. The system (100) according to any of claims 6-12, **characterized in that** the control lever (105) further comprises a screen built into the handle-button panel assembly and connected to at least one motherboard of the plurality of electronic boards, the screen configured to show information about each sensor and actuator of the agricultural machinery and about the operation of all the components of the system (100) received on the at least one motherboard from the harness (102) and alerts generated by the electronic control unit (101) or by the plurality of electronic boards.
